# EUROPEAN PATENT SPECIFICATION

(11) **EP 3 123 102 B1**
(45) Date of publication and mention of the grant of the patent: **04.07.2018**
(21) Application number: 15703353.1
(22) Date of filing: 15.01.2015
(51) Int. Cl.: F42B 15/22, F42B 19/46, F42B 17/00, F42B 22/44

(54) **STAND-OFF DELIVERY OF UNMANNED UNDERWATER VEHICLES**
AUF ENTFERNUNG ABGEWORFENES UNBEMANNTES UNTERWASSERFAHRZEUG
DELIVRANCE A DISTANCE DE VEHICULES SOUS-MARINS SANS EQUIPAGE

(30) Priority: 28.03.2014 US 201414228686
(43) Date of publication of application: 01.02.2017
(73) Proprietor: The Boeing Company, Chicago, IL 60606-1596 (US)
(72) Inventor: STOWERS, Kyle, Chicago, Illinois 60606 (US)
(74) Representative: Boult Wade Tennant
(86) International application number: PCT/US2015/011603
(87) International publication number: WO 2015/147970

(56) References cited:
- DE-A1- 3 617 429
- DE-A1- 4 122 892
- DE-C- 307 280
- GB-A- 2 406 895
- US-A- 2 992 794
- US-A- 5 012 717
- US-A- 5 646 366
- US-A1- 2007 018 033
- US-B1- 6 220 168

## Description

### Field

This disclosure relates to the field of unmanned underwater vehicles.

### Background

An Unmanned Underwater Vehicle (UUV) operates underwater without a human occupant. UUVs include Remotely Operated underwater Vehicles (ROVs) and Autonomous Underwater Vehicles (AUVs). ROVs are controlled remotely by a human operator, while AUVs operate independently of direct human input. UUVs may include sensors that provide information about potential threats in the area that the UUV is operating. UUVs may also include propulsion systems to allow the UUV to detect and track possible targets. For example, a UUV may be deployed in waters around regional hot spots to detect and track ships, submarines, other underwater vehicles, etc., and to provide information back to personnel for analysis. A UUV includes batteries which have a limited capacity for providing power for communication equipment, propulsion, sensors, etc. Thus, UUVs may be limited in the distances that they may travel to various regions of interest without including complicated recharging schemes. Further, UUVs often travel slowly, which may result in delays when the UUVs are tasked with travelling long distances to reach a region of interest.

While aircraft could fly over the region of interest and deploy a UUV, doing so puts the aircraft at potential risk to hostile fire. Further, the aircraft may alert the potential targets that they may be subject to monitoring. In addition, the travel time for the aircraft to the region of interest reduces how quickly UUVs can be deployed.

GB2406895 discloses means for ejecting cargoes from missiles.

It therefore remains a problem to deploy UUVs rapidly and safely in regions of interests.

### Summary

According to the invention, there is provided an apparatus defined by claim 1 and a method defined by claim 9.

Embodiments described herein provide for an apparatus and method related to stand-off deployment of UUVs utilizing self-directed projectiles that include guidance kits. Typically, guidance kits are attached to gravity bombs to convert the gravity bombs into
smart munitions. In the described embodiments, a projectile includes a guidance kit attached to a shell having about the same configuration as a
gravity bomb. The shell is mated with a hollow nose cone that surrounds a UUV. During flight, the guidance kit directs the projectile to a desired location. The nose cone may then be detached, thereby allowing the UUV to be deployed. The apparatus in accordance with independent claim 1 comprises a projectile that includes a guidance kit to direct the projectile in flight. The projectile further includes a shell and a hollow nose cone. The shell mates with the guidance kit and the nose cone couples with the shell. The nose cone includes an interior surface that houses a UUV. The projectile further includes a controller that identifies a condition for deploying the UUV in flight, and detaches the nose cone from the shell in response to determining that the condition is satisfied. Independent method claim 9 describes a method of deploying from an apparatus in accordance with any of claims 1-8 an UUV from an interior surface of a nose cone of a projectile. A guidance kit coupled to the projectile directs the projectile in flight. A controller identifies a condition for deploying the UUV in flight, and detaches the nose cone from the projectile in response to determining that the condition is satisfied. The apparatus in accordance with independent claim 1 comprises a projectile that includes a guidance kit that directs the projectile in flight. The projectile further includes a shell and a controller. The shell mates with the guidance kit, and includes an interior surface that houses a UUV. The controller identifies a condition for deploying the UUV in flight, and deploys the UUV from the interior surface of the shell in response to determining that the condition is satisfied.

The features, functions, and advantages that have been discussed can be achieved independently in various embodiments or may be combined in yet other embodiments further details of which can be seen with reference to the following description and drawings.

### Description of the Drawings

Some embodiments are now described, by way of example only, and with reference to the accompanying drawings. The same reference number represents the same element or the same type of element on all drawings .
FIG. 1 is an illustration of a projectile in an exemplary embodiment.
FIG. 2 is an illustration of a nose cone and UUV assembly for the projectile of FIG. 1 in an exemplary embodiment.
FIG. 3 illustrates various phases 1-5 that will be used to more clearly illustrate how the projectile of FIG. 1 may operate.
FIG. 4 is an illustration of a projectile utilizing a Joint Direct Attack Munition -Extended Range (JDAM-ER) guidance kit in an exemplary embodiment.
FIG. 5 is an illustration of a projectile utilizing a powered JDAM guidance kit in an exemplary embodiment.
FIG. 6 illustrates a UUV utilized for stand-off deployment in an exemplary embodiment.
FIG. 7 is a block diagram of a controller in an exemplary embodiment.
FIG. 8 is a flow chart of a method of deploying a UUV from an interior surface of a nose cone of a projectile in an exemplary embodiment.

### Description

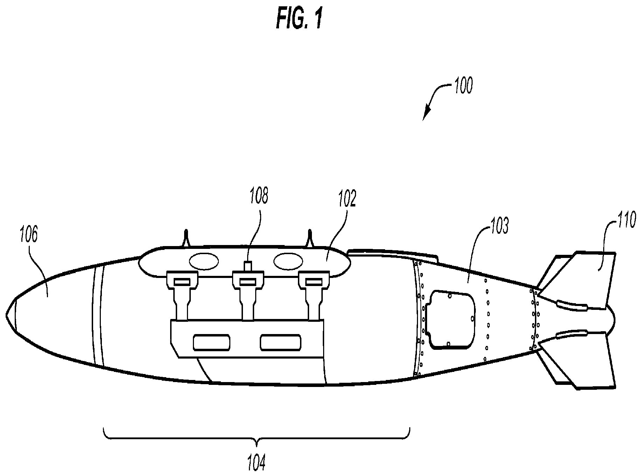

The figures and the following description illustrate specific exemplary embodiments. It will thus be appreciated that those skilled in the art will be able to devise various arrangements that, although not explicitly described or shown herein, embody the principles described herein and are included within the contemplated scope of the claims that follow this description. Furthermore, any examples described herein are intended to aid in understanding the principles of the disclosure, and are to be construed as being without limitation. As a result, this disclosure is not limited to the specific embodiments or examples described below, but by the claims. FIG. 1 is an illustration of a projectile 100 in an exemplary embodiment. Projectile 100 includes any device that may be launched, dropped, fired, deployed, etc., for delivering a UUV to a location that is different from a launch point of projectile 100. For example, projectile 100 may be dropped/launched from an aircraft and begin unpowered and/or powered flight to deliver a UUV to a location that is different from the drop/launch point. Projectile 100 may be dropped/launched from an unmanned aircraft, from a submarine, a ship, an unmanned underwater vehicle, from the ground, etc. Some examples of projectile 100 include a Joint Air-to-Surface Standoff Missile (JAASM), a Joint Standoff Weapon (JSOW), Long Range Anti-Ship Missile (LRASM), a Joint Direct Attack Munition (JDAM), etc.

In this embodiment, projectile 100 includes a guidance kit 102-103 that directs projectile 100 in flight. Guidance kit 102-103 includes a center section 102 and a tail section 103 that mate with a shell 104. Shell 104 may be configured to have approximately the same shape as a bomb. For instance, if guidance kit 102-103 is designed to mate to a BLU-109 gravity bomb, then shell 104 would be approximately the same size as a BLU-109. This allows guidance kit 102-103 to be affixed to shell 104 without a substantial re-design of guidance kit 102-103.

In this embodiment, shell 104 is coupled with a hollow nose cone 106. Nose cone 106, in this embodiment, is configured to house a UUV within an interior surface. Neither the interior surface nor the UUV are visible in FIG. 1, and will be discussed later. Nose cone 106 is configured to be released/detached from shell 104 by a controller 108 when certain conditions are met. To release nose cone 106 from shell 104, a mechanical coupling between nose cone 106 and shell 104 (e.g., a v-band clamp, not shown) may be released, an explosive charge between nose cone 106 and shell 104 (e.g., a shaped linear charge, not shown) may be detonated, etc. The various conditions that may cause nose cone 106 to be released from shell 104 will be discussed later.

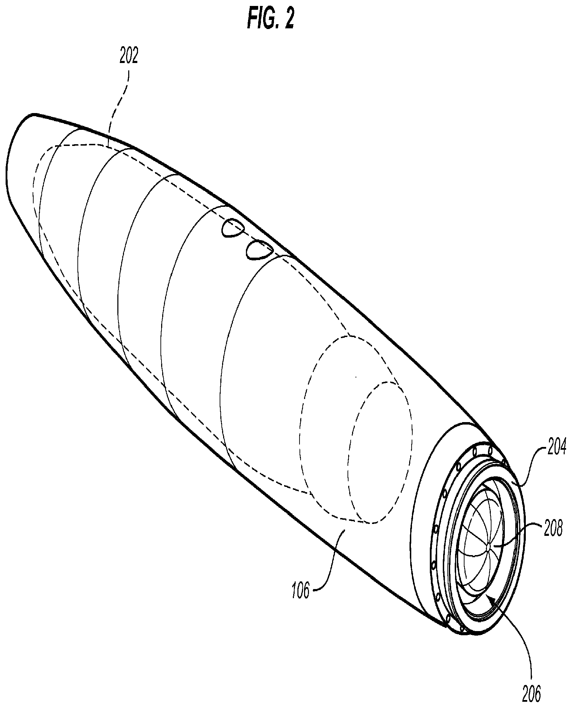

FIG. 2 is an illustration of nose cone 106 housing a UUV 202 within an interior surface 206 in an exemplary embodiment. In this embodiment, nose cone 106 includes a coupling ring 204 that mates with shell 104. In some embodiments, nose cone 106 may include a parachute 208 for deploying UUV 202 from nose cone 202. UUV 202 may include various sensors (not shown) for capturing data when UUV 202 is deployed in the water. For instance, UUV 202 may track and monitor other vehicles (e.g., ships, submarines, etc.) that are proximate to UUV 202.

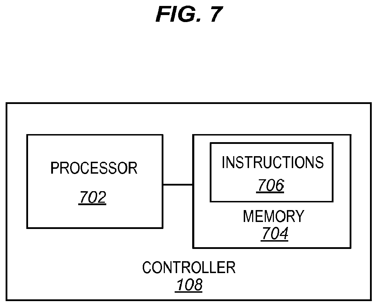

Referring again to FIG. 1, controller 108 is capable of detaching nose cone 106 from shell 104 when certain conditions are met during the flight of projectile 100. For example, if projectile 100 is dropped or fired from an aircraft, then controller 108 may release nose cone 106 from shell 104 in response to a flight time of projectile 100, in response to projectile 100 reaching an altitude, in response to projectile 100 reaching a geographic location, etc. In this regard, controller 108 includes any component, system, or device that is capable of identifying a condition for deploying UUV 202 during flight of projectile 100 by detaching nose cone 106 when the condition is satisfied. FIG. 7 is a block diagram of controller 108 in an exemplary embodiment. Generally, controller 108 may include one or more processors 702. Controller 108 may also include memory 704 (Static Random Access Memory, Flash, Electrically Erasable Read Only Memory, etc.) in order to store programmed instructions 706 executable by processor 702 for implementing the functionality described herein for controller 108. Referring again to FIG. 1, after nose cone 106 is detached from shell 104, UUV 202 may be extracted from nose cone 106 via a parachute 208. For example, in one embodiment, the parachute 208 may inflate and extract UUV 202 from an end of nose cone 106. Although controller 108 is illustrated as part of guidance kit 102-103 in FIG. 1, controller 108 may be part of UUV 202 in some embodiments.

In order to more clearly understand how projectile 100 may operate, the following example is provided. Assume for this example that it is desirable to deploy UUV 202 to monitor various vehicles in a region of interest. One problem with prior UUV delivery systems was that the delivery aircraft may be exposed to hostile fire when flying over the region to deploy the UUV. Further, the flight may alert various targets in the region of interest that they may be subject to monitoring. Both of these are undesirable. When projectile 100 is dropped or fired from an aircraft, guidance kit 102-103 directs projectile 100 a distance away from the aircraft. In some embodiments, guidance kit 102-103 may be an unpowered guidance kit with a flight range of about 28km to 80km. One example of an unpowered guidance kit is a Joint Direct Attack Munition (JDAM) guidance kit, which has a flight range of about 28km. Another example of an unpowered guidance kit is a JDAM-Extended Range (JDAM-ER) guidance kit, which has a flight range of about 80km using wings. An example of a powered guidance kit is a powered JDAM guidance kit, which has a flight range of about 500km by using both wings and a jet/ramjet engine.

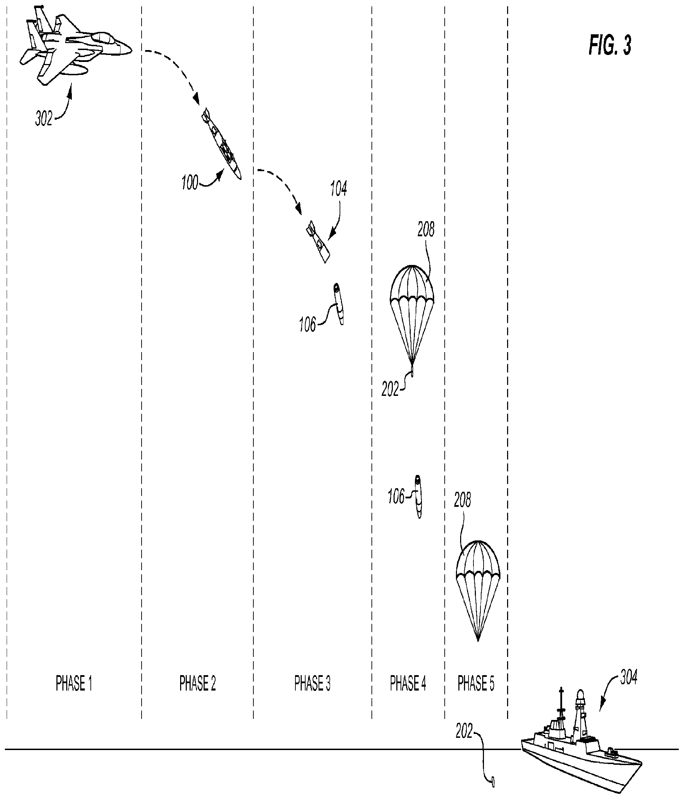

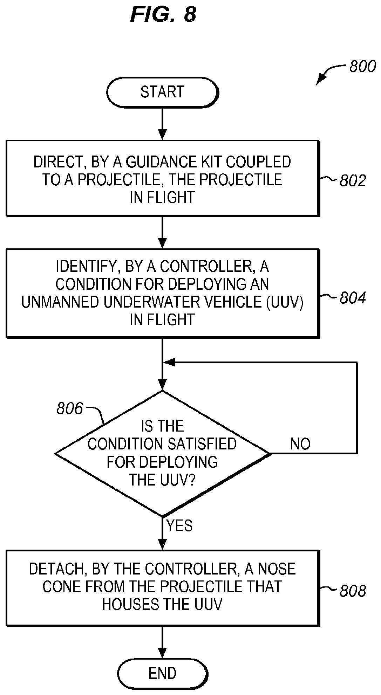

FIG. 3 is an illustration of deploying Projectile 100 from an aircraft 302 in an exemplary embodiment, and FIG. 8 is a flow chart of a method 800 of deploying UUV 202 from an interior surface of nose cone 106 of projectile 100 in an exemplary embodiment. Both FIGs 3 and 8 will be used to more clearly illustrate how projectile 100 may operate. Referring to FIG. 3, in phase 1, aircraft 302 positions projectile 100 some distance away from a desired insertion location of UUV 202, depending on the type of guidance kit 102-103 utilized on projectile 100. For example, if guidance kit 102-103 is a JDAM guidance kit, then aircraft 302 may launch projectile 100 within about 28km from ship 304. If guidance kit 102-103 is a JDAM-ER guidance kit, then aircraft 302 may launch projectile 100 within about 80km from ship 304. If guidance kit 102-103 is a powered JDAM guidance kit, then aircraft 302 may launch projectile 100 within about 500km from ship 304. The desired insertion location would be some distance away from ship 304 to reduce the possibility of detecting the insertion of UUV 202 into the water. However, the insertion location may also be selected based on the propulsion capabilities of UUV 202, if any, the range of sensors on UUV 202, etc.

In phase 2, projectile 100 is deployed and falls similar to a JDAM-equipped gravity bomb when guidance kit 102-103 is a JDAM guidance kit. Guidance kit 102-103 may move one or more fins 110 located on tail section 103 (see FIG. 1 and step 802 of FIG. 8) to direct projectile 100 towards the desired insertion location. Controller 108 identifies a condition for deploying UUV 202 in flight (see step 804 of FIG. 8), and determines if the condition is satisfied (see step 806 of FIG. 8). For example, controller 108 may be programmed to detach nose cone 106 at some pre-determined distance from aircraft 302, at some pre-determined height above water 306, at some particular geographical location, etc. Controller 108 may receive and process Global Positioning System (GPS) signals from a number of satellites (not shown in FIG. 3) to identify a current location of UUV 202, and detonate a shaped charge to decouple nose cone 106 from shell 104 near the desired insertion location. Although phase 2 in FIG. 3 has been described with respect to guidance kit 102-103 being similar to JDAM, one skilled in the art will understand that other embodiments (e.g., JDAM-ER and powered JDAM) may provide glide capabilities and/or powered flight capabilities to projectile 100 as a matter of design choice.

In phase 3, nose cone 106 is decoupled from shell 104 (see step 808 of FIG. 8). Nose cone 106 may fall some pre-determined time and/or distance before phase 4 occurs. In phase 4, UUV 202 is drawn from nose cone 106 by a parachute 208. Parachute 208 slows the decent of UUV 202 towards the water. In phase 5, UUV 202 detaches parachute 208 and enters the water. Parachute 208 may be released in response to UUV 202 entering the water, released in response to UUV 202 arriving at some pre-determined altitude above the water, etc. In response to UUV 202 entering the water, UUV 202 may provide sensor data on ship 304 that is nearby. If UUV 202 includes a propulsion system, then UUV 202 may maneuver into a position to allow UUV 202 to track ship 304 as it travels. In cases where UUV 202 is an AUV, UUV 202 may do this autonomously. In cases where UUV 202 is a ROV, then UUV 202 may communicate with a remote operator to receive movement instructions and subsequently, implement the movement instructions using the propulsion system.

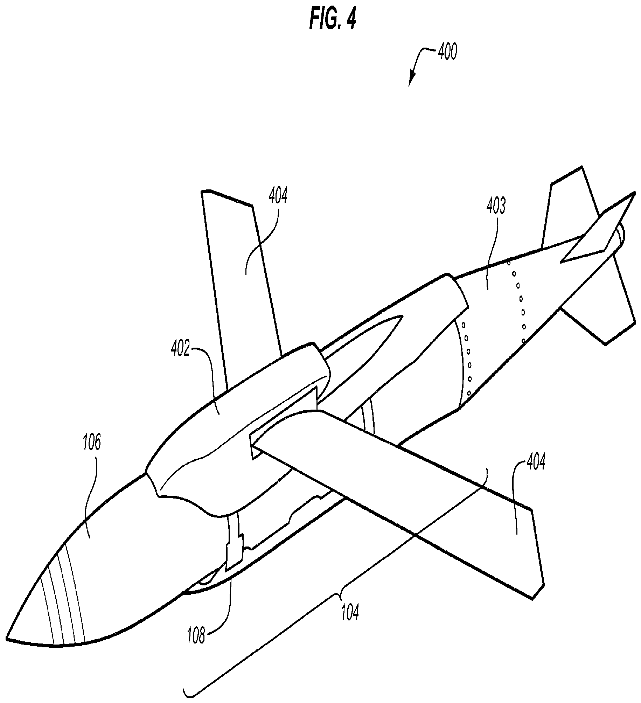

FIG. 4 is an illustration of a projectile 400 utilizing a JDAM-ER guidance kit 402-404 in an exemplary embodiment. In this embodiment, projectile 400 utilizes a JDAM-ER guidance kit 402-404, which has an effective delivery range of about 80km. JDAM-ER guidance kit 402-404 includes a center section 402, a tail section 403, and wings 404. Wings 404 deploy responsive to projectile 400 being launched from an aircraft. In this embodiment, the aircraft may launch projectile 400 at a much longer stand-off distance from the desired insertion point for UUV 202, nearly 4 times the distance. This further reduces the risk to an aircraft when deploying UUV 202 for remote sensing operations, and also reduces the possibility that the aircraft alerts the potential targets in the region of interest. Projectile 400 may operate similar to the various phases described in FIG. 3 and the method of FIG. 8 for deploying UUV 202, with differences being that projectile 400 can glide much longer distances away from aircraft 302 using wings 404 during phase 2.

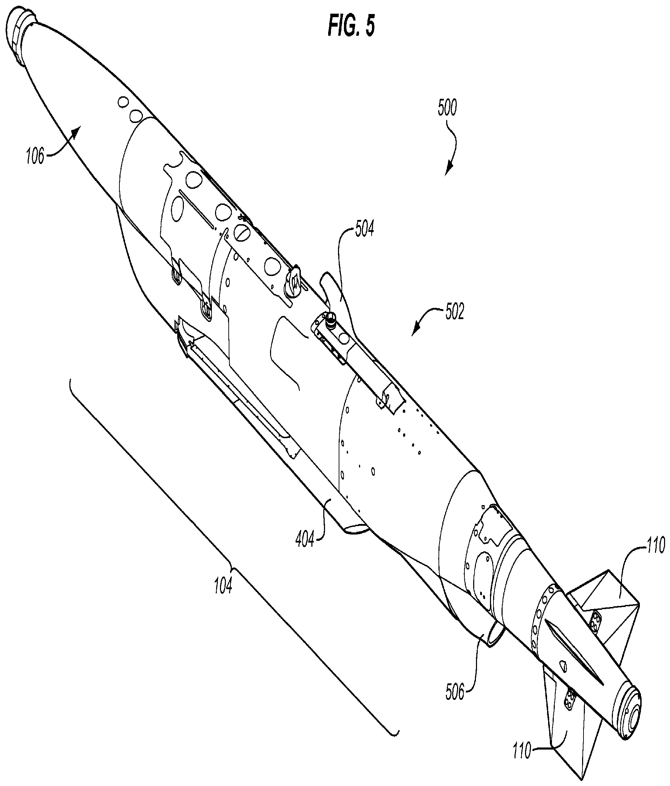

In another embodiment, a powered JDAM guidance kit is used for stand-off deployment of UUV 202. FIG. 5 is an illustration of a projectile 500 utilizing a powered JDAM guidance kit 502 in an exemplary embodiment. In this embodiment, powered JDAM guidance kit 502 is used for stand-off deployment of UUV 202 and utilizes a jet/ramjet engine (not shown). Powered JDAM guidance kit 502 includes an air intake 504 for supplying air to the jet/ramjet engine, and an exhaust port 506 which directs thrust from the jet/ramjet engine for powered flight. Wings 404 are folded in this view, but are deployed during flight. Projectile 500 may be launched from an aircraft, launched from the ground, launched from a submarine, and/or launched from an unmanned aircraft. Therefore, it is not necessary that projectile 500 be launched exclusively from an aircraft. Due to the much longer range (e.g., about 500km), projectile 500 provides an even longer stand-off capability for deploying UUV 202. This further reduces the threat to the launch platform of projectile 500, and further reduces the likelihood that the launch platform would alert potential targets when deploying UUV 202. Projectile 500 may operate similar to the various phases described in FIG. 3 and the method of FIG. 8 for deploying UUV 202, with differences being that projectile 500 can enter a powered flight phase and travel a longer distance away from aircraft 302 using wings 404 and a jet/ramjet engine during phase 2.

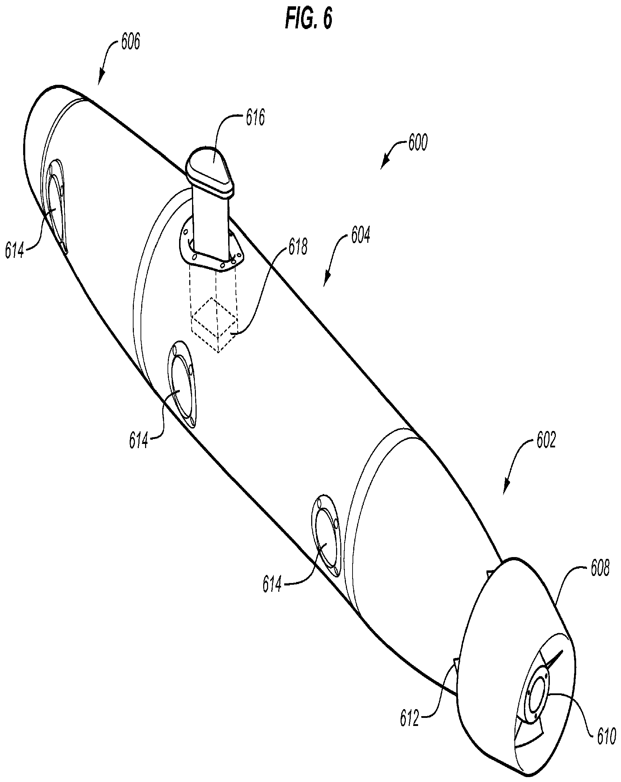

FIG. 6 illustrates a UUV 600 utilized for stand-off deployment in an exemplary embodiment. In this embodiment, UUV 600 includes a tail section 602, a center section 604, and a nose section 606. Tail section 602 includes a prop ring 608, which surrounds a number of moveable fins 612 to allow UUV 600 to change orientation during movement. A propulsion system 610 allows UUV 600 to maneuver through the water.

UUV 600 in this embodiment further includes a number of sensors 614 which allow UUV 600 to collect data about the environment. For instance, sensors 614 may include acoustical sensors allowing UUV 600 to listen to sounds (e.g., machinery sounds, engine sounds, hatch closings, conversations, etc.) on board other vehicles proximate to UUV 600. Sensors 614 may include any number of data collecting capabilities as a matter of design choice.

UUV 600 in this embodiment further includes an antenna assembly 616 coupled to a communication system 618. In this view, antenna assembly 616 is deployed. However, antenna assembly 616 would be retracted in some cases, such as when UUV 600 is enclosed within its corresponding nose cone 106. Communication system 618 allows UUV 600 to communicate via antenna assembly 616 to a remote party, such as a remote operator, a remote intelligence analyst, etc. UUV 600 further includes one or more batteries and other control system electronics which are not visible in this view. During operation, UUV 600 may shadow a target (e.g., a surface ship or a submarine), and gather data about the target utilizing sensors 614. During underwater operation, UUV 600 may retract antenna assembly 616. At various times, UUV 600 may approach the surface and extend antenna assembly 616, which then allows UUV 600 to communicate via radio to a remote party utilizing communication system 618. Such communication may include transmitting sensor data gathered by UUV 600, receiving movement instructions from the remote party, etc.

Any of the various elements shown in the figures or described herein may be implemented as hardware, software, firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, an element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

Although specific embodiments were described herein, the scope is not limited to those specific embodiments. Rather, the scope is defined by the following claims.

## Claims

1. An apparatus comprising:
an Unmanned Underwater Vehicle UUV (202);
a projectile (100) comprising:
a guidance kit (102, 103) configured to direct the projectile in flight;
a shell (104) configured to mate with the guidance kit (102, 103);
a hollow nose cone (106) configured to couple with the shell, wherein the nose cone (106) includes an interior surface (206) configured to house said Unmanned Underwater Vehicle UUV (202);
a controller (108) configured to identify a condition for deploying the UUV (202) in flight, and to detach the nose cone (106) from the shell (104) in response to determining that the condition is satisfied; and
a parachute (108) configured to couple with the UUV (202);
wherein the UUV (202) is configured to deploy the parachute (108) from an end of the nose cone (106) to extract the UUV (202) from the nose cone (106).

2. The apparatus of claim 1 wherein:
the UUV (202) is configured to detach the parachute (108) in response to the UUV (202) landing in water.

3. The apparatus of claim 1 or claim 2 wherein:
the UUV (202) is configured to record sensor data pertaining to another vehicle (304) that is proximate to the UUV (202).

4. The apparatus of claim 3 wherein:
the other vehicle (304) comprises at least one of: a surface ship and an underwater vehicle.

5. The apparatus of any of claims 1 to 4 wherein the UUV (600) includes:
a propulsion system (610) configured to propel the UUV (600); and
a communication system (618) configured to at least one of: transmit the sensor data on the other vehicle (304) to a remote operator, to receive movement instructions from the remote operator, and to implement the movement instructions utilizing the propulsion system (610).

6. The apparatus of any of claims 1 to 5 wherein:
the guidance kit comprises one of: a Joint Direct Attack Munition JDAM guidance kit (102, 103), a Joint Direct Attack Munition Extended Range JDAM-ER guidance kit (402, 403, 404), and a powered Joint Direct Attack Munition JDAM guidance kit (502).

7. The apparatus of any of claims 1 to 6 wherein:
the condition for deploying the UUV (202) comprises at least one of: a distance traveled by the projectile (100), an altitude of the projectile (100), and a geographical location of the projectile (100).

8. The apparatus of any of claims 1 to 7 wherein:
the UUV (202) comprises one of an Autonomous Underwater Vehicle AUV and a Remotely Operated underwater Vehicle ROV.

9. A method of deploying from an apparatus in accordance with any of claims 1 - 8 an Unmanned Underwater Vehicle UUV (202) from an interior surface (206) of a nose cone (106) of a projectile (100), the method comprising:
directing, by a guidance kit (102, 103) coupled to the projectile (100), the projectile in flight;
identifying, by a controller (108), a condition for deploying the UUV (202) in flight; detaching, by the controller (108), the nose cone (106) from the projectile (100) in response to determining that the condition is satisfied; and
deploying a parachute (108) from an end of the nose cone (106) to extract the UUV (202) from the nose cone (106).

10. The method of claim 9 further comprising:
detaching the parachute (108) in response to the UUV (202) landing in water.

11. The method of claim 9 or claim 10 further comprising:
recording sensor data pertaining to another vehicle (304) that is proximate to the UUV (202).

12. The method of claim 11 further comprising:
performing at least one of:
transmitting the sensor data on the other vehicle (304) to a remote operator;
receiving movement instructions from the remote operator; and
implementing the movement instructions utilizing a propulsion system (610) of the UUV (202).

13. The method of any of claims 9 to 12 wherein:
the condition for deploying the UUV (202) comprises at least one of: a distance traveled by the projectile (100), an altitude of the projectile (100), and a geographical location of the projectile (100).

## Patentansprüche

1. Vorrichtung, die umfasst:
ein unbemanntes Unterwasserfahrzeug UUV (202);
einen Flugkörper (100), der umfasst:
einen Lenkungsbausatz (102, 103), der dafür konfiguriert ist, den Flugkörper im Flug zu dirigieren;
eine Ummantelung (104), die dafür konfiguriert ist, mit dem Lenkungsbausatz (102, 103) zusammenzupassen;
eine hohle Flugkörperspitze (106), die dafür konfiguriert ist, an die Ummantelung anzukuppeln, wobei die Flugkörperspitze (106) eine Innenoberfläche (206) aufweist, die dafür konfiguriert ist, das unbemannte Unterwasserfahrzeug UUV (202) unterzubringen;
eine Steuerung (108), die dafür konfiguriert ist, eine Bedingung für das Freisetzen des UUV (202) im Flug zu identifizieren und die Flugkörperspitze (106) von der Ummantelung (104) als Antwort auf die Feststellung, dass die Bedingung erfüllt ist, abzutrennen; und
einen Fallschirm (108), der dafür konfiguriert ist, an das UUV (202) zu koppeln;
wobei das UUV (202) dafür konfiguriert ist, den Fallschirm (108) von einem Ende der Flugkörperspitze (106) freizusetzen, um das UUV (20) aus der Flugkörperspitze (106) herauszuziehen.

2. Vorrichtung nach Anspruch 1, wobei:
das UUV (202) dafür konfiguriert ist, den Fallschirm (108) als Antwort auf das Landen des UUV (202) in Wasser abzutrennen.

3. Vorrichtung nach Anspruch 1 oder Anspruch 2, wobei:
das UW (202) dafür konfiguriert ist, Sensordaten aufzuzeichnen, die zu einem anderen Fahrzeug (304) gehören, das in der Nähe des UUV (202) ist.

4. Vorrichtung nach Anspruch 3, wobei:
das andere Fahrzeug (304) mindestens eines von einem Oberflächenschiff und einem Unterwasserfahrzeug umfasst.

5. Vorrichtung nach einem der Ansprüche 1 bis 4, wobei das UUV (600) einschließt:
ein Antriebssystem (610), das dafür vorgesehen ist, das UUV (600) anzutreiben; und
ein Kommunikationssystem (618), das für mindestens eines von dem Übertragen der Sensordaten über das andere Fahrzeug (304) an einen örtlich entfernt agierenden Bediener, dem Empfangen von Bewegungsanweisungen von dem örtlich entfernt agierenden Bediener und dem Durchführen der Bewegungsanweisungen unter Verwendung des Antriebssystems (610) konfiguriert ist.

6. Vorrichtung nach einem der Ansprüche 1 bis 5, wobei:
der Lenkungsbausatz mindestens einen von einem Joint Direct Attack Munition JDAM Lenkungsbausatz (102, 103), einem Joint Direct Attack Muniton Extended Range JDAM-ER Lenkungsbausatz (402, 403, 404) und einem mit Energie versorgten Joint Direct Attack Munition JDAM Lenkungsbausatz (502) umfasst.

7. Vorrichtung nach einem der Ansprüche 1 bis 6, wobei:
die Bedingung für das Freisetzen des UUV (202) mindestens eines von einer von dem Flugkörper (100) zurückgelegten Strecke, einer Höhe des Flugkörpers (100) und einem geographischen Ort des Flugkörpers (100) ist.

8. Vorrichtung nach einem der Ansprüche 1 bis 7, wobei:
das UUV (202) eines von einem autonomen Unterwasserfahrzeug AUV und einem ferngesteuerten Unterwasserfahrzeug ROV umfasst.

9. Verfahren zum Freisetzen eines unbemannten Unterwasserfahrzeugs UUV (202) aus einer Vorrichtung gemäß einem der Ansprüche 1 bis 8 von einer Innenoberfläche (206) einer Flugkörperspitze (106) eines Flugkörpers (100), wobei das Verfahren umfasst:
Dirigieren des Flugkörpers im Flug mit Hilfe eines Lenkungsbausatzes (102, 103), der an den Flugkörper (100) gekoppelt ist;
Identifizieren einer Bedingung für das Freisetzen des UUV (200) im Flug mit Hilfe einer Steuerung (108);
Abtrennen der Flugkörperspitze (106) von dem Flugkörper (100) mit Hilfe der Steuerung (108) als Antwort auf die Feststellung, dass die Bedingung erfüllt ist; und
Freisetzen eines Fallschirms (108) von einem Ende der Flugkörperspitze (106), um das UUV (202) aus der Flugkörperspitze (106) herauszuziehen.

10. Verfahren nach Anspruch 9, das weiterhin umfasst:
Abtrennen des Fallschirms (108) als Antwort auf das Landen des UUV (202) in Wasser.

11. Verfahren nach Anspruch 9 oder Anspruch 10, das weiterhin umfasst:
Aufzeichnen von Sensordaten, die zu einem anderen Fahrzeug (304) gehören, dass sich in der Nähe des UUV (202) befindet.

12. Verfahren nach Anspruch 11, das weiterhin umfasst:
Durchführen von mindestens einem von:
Übertragen der Sensordaten über das andere Fahrzeug (304) an einen entfernt agierenden Bediener;
Empfangen von Bewegungsanweisungen von dem entfernt agierenden Bediener; und
Durchführen der Bewegungsanweisungen unter Verwendung eines Antriebssystems (610) des UUV (202).

13. Verfahren nach einem der Ansprüche 9 bis 12, wobei:
die Bedingung für das Freisetzen des UUV (202) mindestens eines von einer von dem Flugkörper (100) zurückgelegten Strecke, einer Höhe des Flugkörpers (100) und einem geographischen Ort des Flugkörpers (100) ist.

## Revendications

1. Appareil comprenant :
un véhicule sous-marin sans équipage UUV (202) ;
un projectile (100) comprenant :
un kit de guidage (102, 103) conçu pour diriger le projectile en vol ;
une coque (104) conçue pour correspondre au kit de guidage (102, 103) ;
un cône d'embout creux (106) conçu pour se coupler avec la coque, le cône d'embout (106) comprenant une surface intérieure (206) conçue pour loger ledit véhicule sous-marin sans équipage UUV (202) ;
un contrôleur (108) conçu pour identifier une condition pour le déploiement de l'UUV (202) en vol et pour détacher le cône d'embout (106) de la coque (104) en réponse à la détermination que la condition est satisfaite ; et
un parachute (108) conçu pour se coupler avec l'UUV (202) ;
l'UUV (202) étant conçu pour déployer le parachute (108) à partir d'une extrémité du cône d'embout (106) afin d'extraire l'UUV (202) du cône d'embout (106).

2. Appareil selon la revendication 1, dans lequel :
l'UUV (202) est conçu pour détacher le parachute (108) en réponse à l'amerrissage de l'UUV (202).

3. Appareil selon la revendication 1 ou la revendication 2, dans lequel :
l'UUV (202) est conçu pour enregistrer des données de capteurs concernant un autre véhicule (304) qui est à proximité de l'UUV (202).

4. Appareil selon la revendication 3, dans lequel :
l'autre véhicule (304) comprend au moins un parmi : un navire de surface et un véhicule sous-marin.

5. Appareil selon l'une des revendications 1 à 4, dans lequel l'UUV (600) comprend :
un système de propulsion (610) conçu pour propulser l'UUV (600) ; et
un système de communication (618) conçu pour effectuer au moins une tâche parmi : la transmission des données des capteurs sur l'autre véhicule (304) à un opérateur distant, la réception d'instructions de mouvement provenant de l'opérateur distant et la mise en oeuvre des instructions de mouvement au moyen du système de propulsion (610).

6. Appareil selon l'une des revendications 1 à 5, dans lequel :
le kit de guidage comprend un élément parmi : un kit de guidage de Joint Direct Attack Munition JDAM (102, 103), un kit de guidage de Joint Direct Attack Munition Extended Range JDAM-ER (402, 403, 404) et un kit de guidage alimenté de Joint Direct Attack Munition JDAM (502).

7. Appareil selon l'une des revendications 1 à 6 dans lequel :
la condition pour le déploiement de l'UUV (202) comprend au moins une condition parmi : une distance parcourue par le projectile (100), une altitude du projectile (100) et une localisation géographique du projectile (100).

8. Appareil selon l'une des revendications 1 à 7 dans lequel :
l'UUV (202) comprend un véhicule parmi un véhicule sous-marin autonome AUV et un véhicule sous-marin télécommandé ROV.

9. Procédé de déploiement, à partir d'un appareil selon l'une des revendications 1 à 8, d'un véhicule sous-marin sans équipage UUV (202) à partir d'une surface intérieure (206) d'un cône d'embout (106) d'un projectile (100), ce procédé comprenant :
la direction, à l'aide d'un kit de guidage (102, 103) couplé au projectile (100), du projectile en vol ;
l'identification, par un contrôleur (108) d'une condition pour le déploiement de l'UUV (202) en vol ;
le détachement, par le contrôleur (108), du cône d'embout (106) du projectile (100) en réponse à la détermination que la condition est satisfaite ; et
le déploiement d'un parachute (108) à partir d'une extrémité du cône d'embout (106) pour extraire l'UUV (202) du cône d'embout (106).

10. Procédé selon la revendication 9, comprenant en outre :
le détachement du parachute (108) en réponse à l'amerrissage du de l'UUV (202).

11. Procédé selon la revendication 9 ou la revendication 10, comprenant en outre :
l'enregistrement de données de capteurs concernant un autre véhicule (304) qui est à proximité de l'UUV (202).

12. Procédé selon la revendication 11, comprenant en outre :
la réalisation d'au moins un tâche parmi :
la transmission des données de capteurs sur l'autre véhicule (304) à un opérateur distant ;
la réception d'instructions de mouvements en provenance de l'opérateur distant ; et
la mise en oeuvre des instructions de mouvements au moyen d'un système de propulsion (310) de l'UUV (202).

13. Procédé selon l'une des revendications 9 à 12 dans lequel :
la condition pour le déploiement de l'UUV (202) comprend au moins une condition parmi : une distance parcourue par le projectile (100), une altitude du projectile (100) et une localisation géographique du projectile (100).
